# EUROPEAN PATENT APPLICATION

(11) **EP 4 653 230 A1**
(43) Date of publication of application: **26.11.2025**
(21) Application number: 24177033.8
(22) Date of filing: 21.05.2024
(51) Int. Cl.: B60L 1/00, B60L 3/00, B60L 7/08, B60L 50/75, B60L 58/40, B60W 20/11, B60W 50/00, H01M 8/04007, H01M 8/04111, H01M 8/04228, H01M 8/04303, H01M 8/0432, H01M 8/04701, H01M 8/04955

(54) **A VEHICLE FUEL CELL SYSTEM AND A CORRESPONDING METHOD FOR ACTIVELY COOLING AN ENERGY DISSIPATING RESISTOR IN A VEHICLE FUEL CELL SYSTEM**

(71) Applicant: VOLVO TRUCK CORPORATION, 405 08 Göteborg (SE)
(72) Inventor: BLOMGREN, Fredrik, 425 35 Kärra (SE); ANDERSSON, Arne, 435 42 Mölnlycke (SE); HINDI, Gustavo, 449 50 Alafors (SE)
(74) Representative: Zacco Sweden AB

(57) **Abstract**

A vehicle fuel cell system (20) comprising an energy dissipating resistor (40) arranged in connection with a control unit (50), wherein the control unit (50) is configured to detect an upcoming brake event by the vehicle (10) within a time period, wherein the control unit (50) is configured to predict a temperature of the resistor (40) at an onset of the upcoming brake event, and wherein the control unit (50) is configured to actively cool the resistor (40), in preparation for the upcoming brake event, if the predicted temperature of the resistor (40) at the onset of the upcoming brake event fails to satisfy a temperature acceptance criterion.

## Description

### TECHNICAL FIELD

The disclosure relates generally to a vehicle fuel cell system and a corresponding method for actively cooling an energy dissipating resistor in a vehicle fuel cell system. The disclosure can be applied to heavy-duty fuel cell electric vehicles, such as trucks, buses, and construction equipment, among other vehicle types. Although the disclosure may be described with respect to a particular vehicle, the disclosure is not restricted to any particular vehicle.

### BACKGROUND

Fuel cell vehicles such as fuel cell electric vehicles (FCEV) use hydrogen fuel cells to generate electricity and emit only water vapor as a byproduct. Fuel cell vehicles are advantageous in that they allow for quick refueling of a hydrogen tank, energy recovery, quite operation, versatility, zero emissions and sustainable transportation.

A braking capacity in the fuel cell vehicles comprises different mechanisms such as service brakes, battery brakes, and auxiliary brakes. The service brakes mechanism are conventional brakes that we use in everyday driving, such as disc or drum brakes. The battery brakes mechanism uses regenerative braking by harvesting energy from previous braking in a battery of the vehicle and thus making efficient use of energy during braking. The auxiliary brakes mechanism is an additional braking mechanism that complement the service brakes. The auxiliary brakes convert brake energy to heat dispersed to ambient.

In the fuel cell vehicles, handling braking events/endurance braking may be challenging, as compared to a vehicle propelled solely by an internal combustion engine. Also, the fuel cell vehicles, as compared to battery-driven vehicles, do not have large batteries. Thus, the fuel cell vehicles typically need for a brake resistor. However, such brake resistor needs to be cooled which considering that the fuel cells also need cooling, the cooling of the brake resistor is challenging. Therefore, there is a need for improved vehicle fuel cell system and a corresponding method for actively cooling an energy dissipating resistor in a vehicle fuel cell system.

### SUMMARY

According to a first aspect of the disclosure, a vehicle fuel cell system is disclosed. The vehicle fuel cell system comprises an energy dissipating resistor arranged in connection with a control unit. The control unit is configured to detect an upcoming brake event by the vehicle within a time period. The control unit is configured to predict a temperature of the resistor at an onset of the upcoming brake event. The control unit is configured to actively cool the resistor, in preparation for the upcoming brake event, if the predicted temperature of the resistor at the onset of the upcoming brake event fails to satisfy a temperature acceptance criterion.

In the fuel cell vehicles, when the vehicle switches from propulsion to braking i.e. when the vehicle enters a brake event, the vehicle's power ramps down from its propulsion power to its idle/target power or at least a lower power than its propulsion power. The lower power may apply when a next brake event begins before the vehicle's power reaches its idle power. Accordingly, the power of the fuel cell system needs to be ramped down from its propulsion power to its idle/target power or at least a lower power than its propulsion power. The lower power may again apply when a next brake event begins before the power of the fuel cell system reaches its idle power. However, the power of the fuel cell system ramps down at a slower rate than a rate that the vehicle's power ramps down. This means that there is a time delay between the fuel cell system's power and the vehicle's power reaching their respective idle power or at least their respective lower power. Such slower ramp down rate of the power of the fuel cell system, compared to the vehicle's power is necessary, as it prevents degradation of the fuel cell system. If the braking periods of the vehicle are long-lasting and extensive, the batteries will eventually become fully charged and can no longer absorb braking power. In such cases, an energy dissipating resistor is typically used to handle the excessive heat generated once the batteries are fully charged. The energy dissipating resistor dissipate the excessive kinetic energy into heat. However, the resistor becomes heated up and thus needs to be cooled down during the ramp down time of the fuel cell power to e.g. avoid overheating of the resistor. The fuel cell also needs to be protected during such ramp down time of the fuel cell power to ensure an appropriate e.g. a slow ramp down of the fuel cell power to prevent e.g. degradation of the fuel cell. The resistor may be cooled using a component shared with the fuel cell. For instance, the resistor may be cooled using a liquid cooling system which is also used to cool the fuel cell during the ramp down of the fuel cell power. Alternatively, the resistor may be cooled using a compressor which is also used to provide air to the fuel cell during the ramp down of the fuel cell. Therefore, there is a need for an improved vehicle fuel cell system and a corresponding method for actively cooling an energy dissipating resistor in a vehicle fuel cell system that addresses the abovementioned challenges.

The first aspect of the disclosure aims to address the abovementioned challenges by detecting the upcoming brake event by the vehicle within a time period, predicting the temperature of the resistor at the onset of the upcoming brake event, and by actively cooling the resistor, in preparation for the upcoming brake event, if the predicted temperature of the resistor at the onset of the upcoming brake event fails to satisfy the temperature acceptance criterion. A technical benefit of the first aspect of the disclosure is that it allows for the energy dissipating resistor to be cool when the brake event starts. Thereby, there is a time window, starting from the onset of already started brake event, in which the energy dissipating resistor does not need to be cooled due to a thermal inertia of the resistor. The time window may correspond to initial stages of the already started brake event. Thus, the component shared between the resistor and the fuel cell either a compressor or a cooling system of the vehicle fuel cell system can be fully utilized to ensure a slow ramp down of the fuel cell's power during that time window. Thereby, the first aspect of the disclosure allows for protecting the fuel cell i.e. preventing, or at least mitigating a degradation of the fuel cell by ensuring an appropriate e.g. a slow ramp down of the fuel cell's power from its propulsion power to its idle power or a lower power than its propulsion power in a simple, efficient, user- and cost-friendly manner. In addition, the first aspect of the disclosure allows for protecting the resistor i.e. preventing or at least mitigating thermal stress of the resistor in a simple, robust, efficient, user- and cost-friendly manner. Thereby, the first aspect of the disclosure allows for increasing a lifespan of the fuel cell and the resistor while ensuring their performance in an efficient and stable manner.

The control unit is configured to detect the upcoming brake event by the vehicle within the time period. The detection of the upcoming brake event may be performed in a manner which per se is known in the art. The control unit may be configured to detect the upcoming brake event by the vehicle at regular time intervals in the range of 1 to 30 min, preferably in the range of 1 to 10 min. For instance, the control unit may be configured to detect the upcoming brake event by the vehicle every 10 min, preferably every 5 min, more preferably every 2 min. The control unit may be configured to detect the upcoming brake event by the vehicle at a beginning of each route that the vehicle is driving into. This may be done e.g. based on input from a Global Positioning Sensor (GPS) of the vehicle. For instance, the control unit may be configured to detect the upcoming brake event by the vehicle at the beginning of every route that the vehicle is planned to drive into. In this case, the control unit may be configured to detect the upcoming brake event by the vehicle at a longer time intervals such as a 30 min time interval.

The control unit is configured to predict the temperature of the resistor at the onset of the upcoming brake event. The prediction of the temperature of the resistor may be performed in a manner which per se is known in the art such as predicting based on previous collected data e.g. stored in a database. The control unit may preferably predict the temperature of the resistor at the onset of the upcoming brake event simultaneously with detecting the upcoming brake event.

The control unit is configured to actively cool the resistor, in preparation for the upcoming brake event, if the predicted temperature of the resistor at the onset of the upcoming brake event fails to satisfy the temperature acceptance criterion. Thereby the control unit allows for cooling the resistor during a time, starting from the time that the control unit detects the upcoming brake event until the onset of the upcoming brake event. Thereby, there is a time window, corresponding to a distance window, the time window starting from the onset of already started brake event in which the energy dissipating resistor does not need to be cooled due to a thermal inertia of the resistor.

The temperature acceptance criterion may be related to a mass of the resistor. The temperature acceptance criterion may be related to a heat capacity of the resistor. The temperature acceptance criterion may be related to the time window i.e. initial stages of the upcoming brake event. The temperature acceptance criterion may be related to a brake power that needs to passed to the resistor to be dissipated during the time window. The temperature acceptance criterion may be related to a temperate of the resistor when the control unit detects the upcoming brake event or when the control unit predicts the temperature of the resistor at the onset of the upcoming brake event. The control unit may preferably be configured to actively cool the resistor, in preparation for the upcoming brake event, if the predicted temperature of the resistor at the onset of the upcoming brake event is above a lowest possible temperature of the resistor. This in turn may allow for a robust and efficient vehicle fuel cell system.

By the term "idle" is hereby meant a target power. The terms "fuel cell" and "fuel cell system" may be used interchangeably throughout the text, both referring to one or more, typically hundreds of fuel cells, forming a fuel cell stack for generating the desired propulsion power supplied to the vehicle. By the "onset" is hereby meant a start/beginning of the upcoming brake event. The onset may correspond to first few seconds of the upcoming brake event such as 5 sec, 2 sec, or preferably 1 sec.

Optionally in some examples, including in at least one preferred example, the control unit is configured to detect the upcoming brake by the vehicle by looking ahead a predetermined time period. The predetermined time period may correspond to a time required to actively cool the resistor to a nominal temperature or a lowest possible temperature. A technical benefit may include ensuring that the resistor is cool in a robust manner when the brake event starts, thereby fully utilizing the cooling means to ensure a slow ramp down of the fuel cell's power during the time window. The predetermined time period may correspond to a time that it takes to cool down the resistor. The predetermined time period may preferably correspond to a time longer than the time it takes to cool down the resistor. The predetermined time period may be the same as the time period which within the control unit detects the upcoming brake event by the vehicle. The predetermined time period does not need to be the same as the time period. The "nominal" temperature may correspond to the lowest possible temperature of the resistor.

Optionally in some examples, including in at least one preferred example, the control unit is configured to detect the upcoming brake by the vehicle within the time period, the time period corresponding to a distance window. Thereby, after passing the distance window, the vehicle may likely brake. The distance window may be calculated based on input from one or more sensors of the vehicle such as input from the GPS of the vehicle.

Optionally in some examples, including in at least one preferred example, the system further comprises a fuel cell system. The temperature acceptance criterion may correspond to a ramp down time of the fuel cell system. Thereby, the ramp down time of the fuel cell may be controlled to ensure a slow ramp down of the fuel cell's power from its propulsion power to its idle power or to a lower power than its propulsion power.

Optionally in some examples, including in at least one preferred example, the system further comprises a compressor arranged in connection with the fuel cell system and configured to provide air to the fuel cell system. The control unit may be configured to actively cool the resistor, in preparation for the upcoming brake event, by the compressor. Thereby, the control unit may be configured to control the compressor to actively cool the resistor down while the resistor is dissipating energy into heat. For example, the control unit may control/activate a valve e.g. a separation valve to bleed at least part/portion of the air flow from the compressor to the resistor. The compressor may be an integrated compressor brake box (CBB) e.g. an air compressor. By the term "actively cool" is hereby meant cooling while being controlled all the time during cooling by the control unit. In other words, the term "actively cool" means that the control unit controls the resistor being cooled during the cooling time.

Optionally in some examples, including in at least one preferred example, the system further comprises a cooling system arranged in connection with a fuel cell system and configured to cool down the fuel cell system. The control unit may be configured to actively cool the resistor, in preparation for the upcoming brake event, by the cooling system. Thereby, the control unit may be configured to control the cooling system to actively cool the resistor down while the resistor is dissipating energy into heat. For example, the control unit may control/activate a valve e.g. a separation valve to direct at least part/portion of the cooling liquid from the cooling system to the resistor. The cooling system may be a conventional cooling system configured for cooling the fuel cell system. The control unit may be configured to actively cool the resistor down while the resistor is dissipating energy into heat either by the compressor or by the cooling system.

Optionally in some examples, including in at least one preferred example, the control unit is configured to control a status of a power of the cooling system, prior to actively cooling the resistor. Thereby, the control unit may control the status of the power of the cooling system to ensure that the cooling system can be used to cool the resistor. For instance, in a case that the cooling system is run at its maximum capacity to cool down the fuel cell system, the power of the fuel cell system may be decreased to allow for cooling of the resistor at the same time as the cooling of the fuel cell system. This may in turn allow for cooling the resistor while protecting the fuel cell system.

Optionally in some examples, including in at least one preferred example, the control unit is configured to control a status of a power of the fuel cell system, prior to actively cooling the resistor. Thereby, the control unit may control the status of the power of the fuel cell system to ensure that the cooling system can be used to cool the resistor. For instance, in a case that the power of the fuel cell system is at its maximum, the power of the fuel cell system may be decreased to use at least a portion/part of the cooling system capacity to cool the resistor at the same time as the fuel cell system. This may in turn allow for cooling the resistor while protecting the fuel cell system.

Optionally in some examples, including in at least one preferred example, the control unit is configured to detect the upcoming brake event by the vehicle within a time period based on any of or any combination of received inputs, the inputs being related to a vehicle weight, vehicle speed, road altitude, a road inclination, global positioning system, route, and current temperature of the resistor. The inputs may be received via various types of sensors arranged at/on/in the vehicle. The sensors may be arranged at another device or a station being in communication with the vehicle fuel cell system. The sensors may be configured to detect vehicle weight, vehicle speed, road altitude, a road inclination, global positioning system, route, and current temperature of the resistor. The control unit may preferably be configured to detect the upcoming brake event by the vehicle within the time period based on the received input related to the road inclination, as the road inclination allows for predicting the upcoming brake event.

According to a second aspect of the disclosure, a heavy-duty fuel cell electric vehicle is disclosed. The heavy-duty fuel cell electric vehicle comprises a vehicle fuel cell system. The vehicle fuel cell system comprises an energy dissipating resistor arranged in connection with a control unit. The control unit is configured to detect an upcoming brake event by the vehicle within a time period. The control unit is configured to predict a temperature of the resistor at an onset of the upcoming brake event. The control unit is configured to actively cool the resistor, in preparation for the upcoming brake event, if the predicted temperature of the resistor at the onset of the upcoming brake event fails to satisfy a temperature acceptance criterion. This aspect may generally present the same or similar advantages as defined above according to the first aspect of the invention. In overall, the second aspect of the disclosure allows for increasing a lifespan of the fuel cell and the resistor of the heavy-duty FECV while ensuring their performance in an efficient manner. Thus, the second aspect of the disclosure allows for increasing a lifespan of the heavy-duty FECV while ensuring its performance in an efficient and stable manner.

According to a third aspect of the invention, a method for actively cooling an energy dissipating resistor in a vehicle fuel cell system is disclosed. The vehicle fuel cell system comprises a control unit. The method comprises the step of detecting an upcoming brake event of the vehicle, by the control unit, within a time period. The method further comprises the step of predicting a temperature of the resistor of the vehicle fuel cell system at an onset of the upcoming brake event by the control unit. The method further comprises the step of actively cooling the resistor, in preparation for the upcoming brake event, if the predicted temperature of the resistor at the onset of the upcoming brake event fails to satisfy a temperature acceptance criterion. This aspect may generally present the same or similar advantages as defined above according to the first and second aspects of the invention. The vehicle fuel cell system may further comprise a fuel cell system. The temperature acceptance criterion may correspond to a ramp down time of the fuel cell system.

Optionally in some examples, including in at least one preferred example, the step of detecting the upcoming brake event comprises looking ahead a predetermined time period. The predetermined time period corresponds to a time required to actively cool the resistor to a nominal temperature. A technical benefit may include ensuring that the resistor is cool when the brake event starts, thereby fully utilizing the cooling means to ensure a slow ramp down of the fuel cell's power during the time window. The predetermined time period may correspond to a time that it takes to cool down the resistor. The predetermined time period may preferably correspond to a time longer than the time it takes to cool down the resistor. The predetermined time period may be the same as the time period which within the control unit detects the upcoming brake event by the vehicle. The predetermined time period does not need to be the same as the time period.

Optionally in some examples, including in at least one preferred example, the step of detecting the upcoming brake event comprises detecting the upcoming brake by the vehicle within the time period. The time period may correspond to a distance window. Thereby, after passing the distance window, the vehicle may likely brake. The distance window may be calculated based on input from one or more sensors of the vehicle such as input from the GPS of the vehicle.

Optionally in some examples, including in at least one preferred example, the step of actively cooling the resistor comprises actively cooling the resistor, in preparation for the upcoming brake event, by a compressor. The vehicle fuel cell system may comprise the compressor. The compressor may be arranged in connection with the fuel cell system. The compressor may be configured to provide air to the fuel cell system.

Optionally in some examples, including in at least one preferred example, the step of actively cooling the resistor comprises actively cooling the resistor, in preparation for the upcoming brake event, by a cooling system. The vehicle fuel cell system may comprise the cooling system. The cooling system may be arranged in connection with a fuel cell system. The cooling system may be configured to cool down the fuel cell system. The control unit may be configured to actively cool the resistor down while the resistor is dissipating energy into heat either by the compressor or by the cooling system.

Optionally in some examples, including in at least one preferred example, the method further comprises controlling a status of a power of a cooling system, prior to actively cooling the resistor. This may in turn allow for ensuring that the cooling system can be used to cool the resistor while protecting the fuel cell system.

Optionally in some examples, including in at least one preferred example, the method further comprises controlling a status of a power of the fuel cell system, prior to actively cooling the resistor. This may in turn allow for ensuring that the cooling system can be used to cool the resistor while protecting the fuel cell system.

Optionally in some examples, including in at least one preferred example, the step of detecting an upcoming brake event of the vehicle, by the control unit, comprises detecting the upcoming event based on received inputs, by various sensors to, such as a road altitude, global positioning system, GPS, route, and current temperature of the resistor. The inputs may be received via various types of sensors arranged at/on/in the vehicle. The sensors may be configured to detect vehicle weight, vehicle speed, road altitude, a road inclination, global positioning system, route, and current temperature of the resistor. The step of detecting the upcoming brake event of the vehicle, by the control unit, may preferably comprise detecting the upcoming brake event based on the received input related to the road inclination, as the road inclination allows for predicting the upcoming brake event.

According to a fourth aspect of the invention, a computer-implemented method for actively cooling an energy dissipating resistor in a vehicle fuel cell system is disclosed. The computer-implemented method may comprise the steps of a method according to the third aspect of the invention. The method is configured to be performed by a processing circuitry of a control unit of the vehicle fuel cell system.

According to a fifth aspect of the invention, a computer program product is disclosed. The computer program product comprises program code for performing, when executed by the processing circuitry, the method according to the third aspect of the invention.

According to a sixth aspect of the invention, a non-transitory computer-readable storage medium is disclosed. The on-transitory computer-readable storage medium comprises instructions, which when executed by the processing circuitry, cause the processing circuitry to perform the method according to the third aspect of the invention.

The fourth, fifth and sixth aspects of the invention may generally present the same or similar advantages as defined above according to the first, second, and third aspects of the invention.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a block diagram illustrating a side view of an example of a vehicle, in accordance with examples of the present disclosure.
**FIG. 2** is a block diagram illustrating an example of a vehicle fuel cell system of the vehicle of FIG. 1, in accordance with examples of the present disclosure.
**FIG. 3** shows various graphs related to a road altitude, a state of charge (SoC), a power of a FCEV, a power of a fuel cell of the FCEV and a resistor temperature with respect to time.
**FIG. 4** is a flowchart illustrating an example of a method of actively cooling an energy dissipating resistor in a vehicle fuel cell system.

### DETAILED DESCRIPTION

The detailed description set forth below provides information and examples of the disclosed technology with sufficient detail to enable those skilled in the art to practice the disclosure.

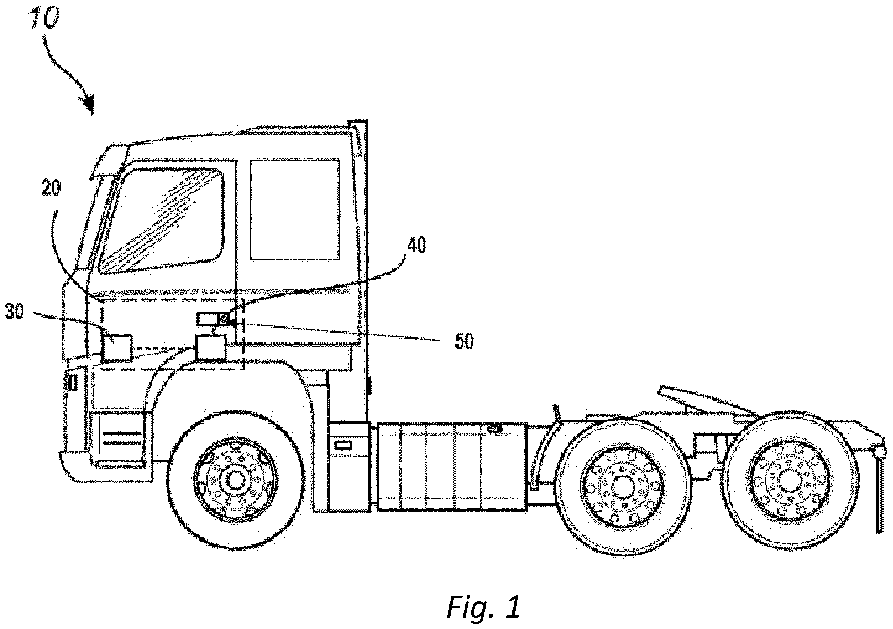

**FIG. 1** is a block diagram illustrating a side view of an example of a vehicle in accordance with examples of the present disclosure. **FIG. 1** shows a heavy-duty fuel cell electric vehicle 10. The vehicle 10 is shown as a truck, such as a heavy-duty truck. It should however be appreciated that the present disclosure is not limited to this, or any other specific type of vehicle, and may be used in /any other type of vehicle, such as a bus, construction equipment, e.g. a wheel loader and an excavator, a passenger car. The vehicle may in some examples also be a marine vessel. In some examples, the vehicle may be an aircraft. The vehicle 10 may be an autonomous vehicle, i.e. a self-driving vehicle, and/or the vehicle 10 may be arranged to be operated by a driver. The driver may be an on-board driver and/or an off-board driver which controls the vehicle from a remote location.

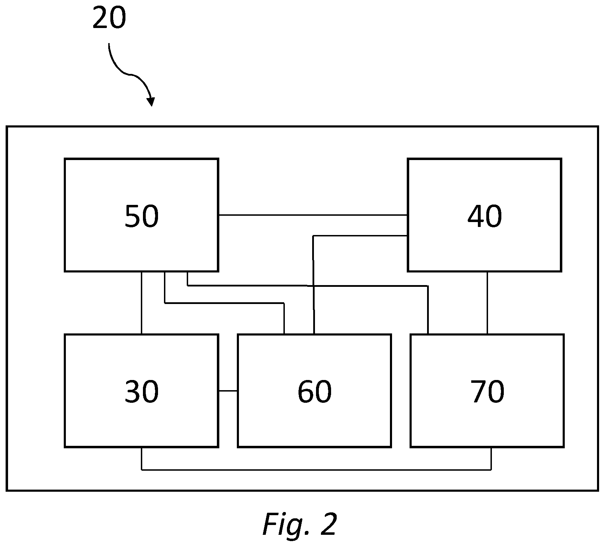

**FIG. 2** shows a block diagram illustrating an example of a vehicle fuel cell system 20 of the vehicle 10, shown in **FIG.1****.** In connection to **FIG.1** and **FIG. 2****,** the vehicle fuel cell system 20 comprises an energy dissipating resistor 40. The energy dissipating resistor 40 is arranged in connection with a control unit 50. The control unit 50 is configured to detect 110 an upcoming brake event by the vehicle 10 within a time period. The control unit 50 is configured to predict 120 a temperature of the resistor 40 at an onset of the upcoming brake event. The control unit 50 is configured to actively cool 140 the resistor 40, in preparation for the upcoming brake event, if the predicted temperature of the resistor 40 at the onset of the upcoming brake event fails to satisfy a temperature acceptance criterion.

The energy dissipating resistor 40 may convert electric energy into thermal energy when power is transmitted to the brake resistor 40. Thus, the resistor 40 may require cooling to reduce a temperature of the brake 40 below a certain threshold. The resistor 40 may be a conventional and commercially available resistor.

Still in connection with **FIG.1** and **FIG. 2****,** the vehicle fuel cell system 20 may further comprise a fuel cell system 30. The temperature acceptance criterion may correspond to a ramp down time of the fuel cell system 30. The fuel cell system 30 may comprise a plurality of fuel cell systems 30, e.g., two or more fuel cell systems, such that the vehicle 10 may have multiple fuel cell system 30, e.g., two or more fuel cell systems. In some examples, the fuel cell system 30 may comprise more than two fuel cell systems 30, such as three, four, five, or more than five fuel cell systems 30. Each fuel cell system 30 may comprise one or more, typically multiple, fuel cells which together form a fuel cell stack.

The fuel cell system 30 may comprise a fuel cell stack comprising an anode or anode side, a cathode or cathode side, and a membrane such as e.g. PEM separating the anode and cathode. The anode of the fuel cell system 30 may receive fuel such as hydrogen and the cathode may receive an oxidant such as oxygen or air - typically an air acquired from the outside environment. As a result of the electrochemical reaction that occurs in a fuel cell stack of fuel cell system 30, electrical energy is produced that is supplied to a load such as e.g. one or more electric motors. A by-product of operation of the fuel cell stack is water and heat. The structure of the fuel cell system 30 is not shown in detail herein, and examples herein are not limited to any specific implementation of the fuel cell system 30.

Still in connection with **FIG.1** and **FIG. 2****,** the control unit 50 may be configured to detect 110 the upcoming brake by the vehicle 10 by looking ahead a predetermined time period. The predetermined time period may correspond to a time required to actively cool 140 the resistor 40 to a nominal temperature. The control unit 50 may be configured to detect 110 the upcoming brake by the vehicle 10 within the time period, the time period corresponding to a distance window. The predetermined time period may be in the range of 1 to 30 min. The predetermined time period may be the same as the time period which within the control unit 50 detects the upcoming brake event by the vehicle 10. The predetermined time period does not need to be the same as the time period. The time period may be in the range of 1 to 30 min. The distance window may be in the range of 5 to 30 km.

**FIG. 2** shows that the system 20 further comprises a compressor 60. The compressor 60 may be arranged in connection with the fuel cell system 30. The compressor 60 may be configured to provide air to the fuel cell system 30. The control unit 50 is configured to actively cool 140 the resistor 40, in preparation for the upcoming brake event, by the compressor 60. The compressor 60 may be an integrated compressor brake box (CBB). The compressor 60 may be an air compressor. The compressor 60 may be configured to receive air from atmosphere, such as an air from an ambient environment. The compressor may be configured to pressurize the received air to form compressed air. The compressor 60 may be configured to output the compressed air. The compressor 60 may be an electrically driven compressor. The compressor 60 may be configured to operate in any type of driving situation, including when the vehicle is not braking. The compressor 60 may be configured to provide the compressed air to the fuel cell system 30. The compressor 60 may be operated to adjust a pressure level of the intake air to levels suitable for the fuel cell system 30. The compressor 60 may be operated in a way to provide a desired mass flow at different set points for power. A consumption of the compressor's power may be proportional to the mass flow of the compressed air.

**FIG. 2** shows that the system 20 further comprises a cooling system 70. The cooling system 70 may be arranged in connection with a fuel cell system 30. The cooling system 70 may be configured to cool down the fuel cell system 30. The control unit 50 may be configured to actively cool the resistor 40, in preparation for the upcoming brake event, by the cooling system 70. The cooling system 70 may supply a cooling medium e.g. a cooling liquid to the fuel cell system 30. The control unit 50 may be configured to control 130 a status of a power of the cooling system 70, prior to actively cooling the resistor 40. The control unit 50 may be configured to control 130 a status of a power of the fuel cell system 30, prior to actively cooling 140 the resistor 40. The control unit 50 may control how much power is supplied to the cooling system 70. The control unit 50 may control how much power is supplied to the fuel cell system 30. The control unit 50 may adjust the power of the cooling system 70 or the power of the fuel cell system 30 in preparation for the upcoming brake event. The control unit 50 may be configured to detect 110 the upcoming brake event by the vehicle 10 within a time period based on any of or any combination of received inputs, the inputs being related to a vehicle weight, vehicle speed, road altitude, a road inclination, global positioning system, route, and current temperature of the resistor 40. The vehicle 10 may comprise one or more sensors. The sensors may be arranged at/in/on the vehicle 10. The sensors may be configured to provided inputs to the control unit 50. The sensors may be configured to provide inputs related to a vehicle weight, vehicle speed, road altitude, a road inclination, global positioning system, route, and current temperature of the resistor 40. The control unit 50 may be configured to receive inputs from such sensors. The control unit 50 may be configured to detect 110 the upcoming brake event by the vehicle 10 within the time period based on any of or any combination of received inputs. For instance, the control unit 50 may be configured to detect 110 the upcoming brake event by the vehicle 10 within the time period based on received input related to road inclination.

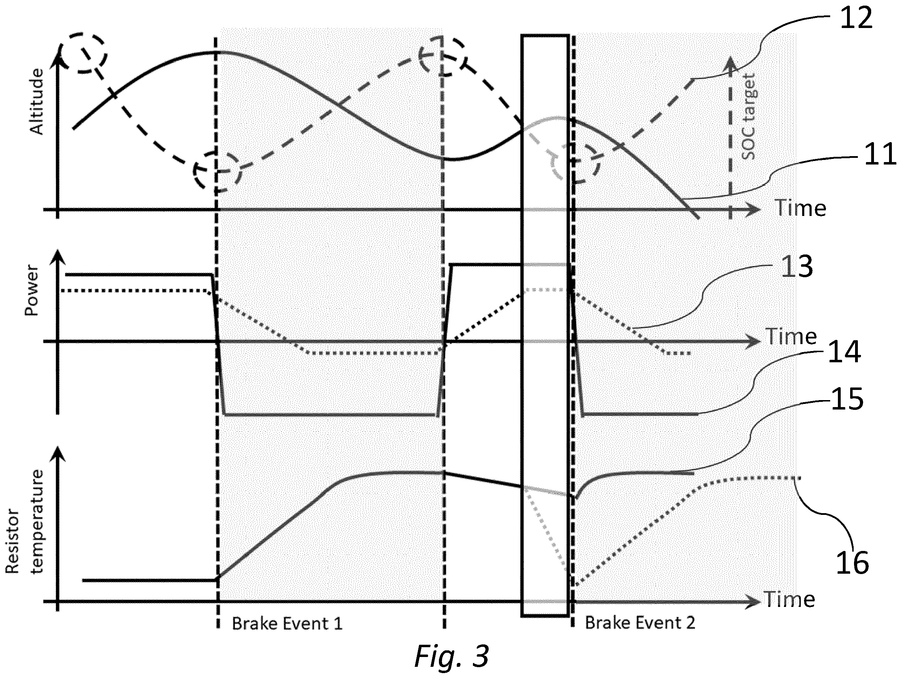

**FIG. 3** schematically illustrates various graphs. Graph 11 shows a road altitude with respect to time. The graph 11 shows that the road altitude varies as the vehicle 10 drives along the road. The vehicle 10 may be a heavy-duty FCEV vehicle 10. Graph 12 shows a state-of-charge (SoC) of a battery of the vehicle 10. The graph 12 shows that kinetic energy from a brake event 1 is stored in the battery and thus the SoC increases after the brake event 1. Graph 14 shows a power of the vehicle 10 over time. The graph 14 shows that when the vehicle 10 brakes e.g. the brake event 1, the power of the vehicle 10 ramps down from its propulsion power to its idle power and remains at the idle power during a time of the brake event 1. Graph 13 shows a power of the fuel cell system 30 over time. The graph 13 shows that when the vehicle 10 brakes e.g. the brake event 1, the power of the fuel cell system 30 ramps down from its propulsion power to its idle power and remains at the idle power during a time of the brake event 1. The graphs 13 and 14 show that the power of the fuel cell system 30 ramps down at a slower rate, compared to the power of the vehicle.

Still in connection with **FIG. 3****,** graph 15 shows a temperature of a resistor 40 of the vehicle 10 over time. The graph 15 shows that the resistor 40 is cool before and at a start of the brake event 1. Therefore, the resistor 40 may not need to be cooled, as the resistor 40 is already cool. Thereby, a cooling means either a compressor 60 or a cooling system 70 may be fully utilized to ramp down the power of the fuel cell system 30 at a desired/target rate. The graph 15 shows that the temperature of the resistor 40 increases during the time of the brake event 1. The graph 15 shows that after the brake event 1, the vehicle 10 enters a propulsion event before the vehicle 10 enters a brake event 2. During the propulsion event, the resistor 40 may be passively cooled. By "passively cool", it is meant that the compressor 60 or the cooling system 70 are not used to cool down the resistor 40. For instance, the resistor may be passively cooled by exchanging air with ambient. Thereby, the compressor 60 or the cooling system 70 may be used to keep a temperature of the fuel cell system 30 at its desired/target value. The graph 15 shows that the propulsion event is not long enough for the resistor 40 to cool down sufficiently before entering the brake event 2. In other words, the graph 15 shows that at the onset of the brake event 2, the temperature of the resistor 40 fails to satisfy a temperature acceptance criterion. The graph 15 shows that the temperature of the resistor 40 increases even more during the brake event 2 if the resistor 40 does not become cooled down. According to the present invention, the control unit 50 is configured to detect 110 an upcoming brake event, in this case the brake event 2, by the vehicle 10 within a time period. The time period is shows by an area (shown as a rectangle) before the start of the brake event 2 in **FIG. 3****.**

Still in connection with **FIG. 3****,** graph 16 shows that the resistor 40 is actively cooled, in preparation for the brake event 2, as a predicted temperature of the resistor 40 at the onset of the brake event 2 fails to satisfy a temperature acceptance criterion. The resistor 40 may be actively cooled by either the compressor 60 or the cooling system 70 of the vehicle fuel cell system 20. Thereby, there is a time window, starting from the onset of the brake event 2, in which the resistor 40 does not need to be cooled due to a thermal inertia of the resistor 40. Thus, the cooling means either the compressor 60 or the cooling system 70 may be fully utilized to ensure a slow ramp down of the power of the fuel cell system 30 during that time window.

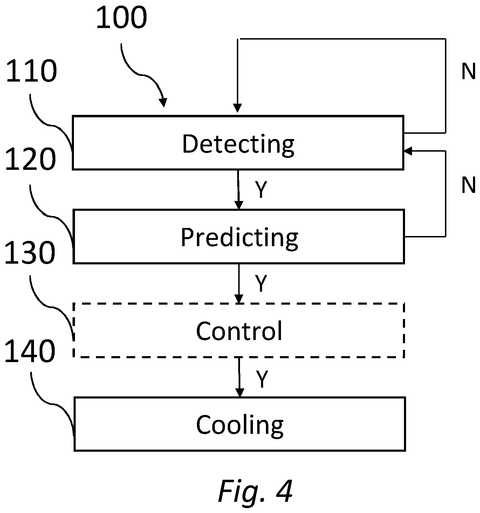

**FIG. 4** shows a flowchart illustrating an example of a method 100 of actively cooling an energy dissipating resistor 40 in a vehicle fuel cell system 20. The vehicle fuel cell system 20 comprises a control unit 50. **FIG.** 4 shows that the method 100 comprises the step of detecting 110 an upcoming brake event of the vehicle 10, by the control unit 50, within a time period. The step of detecting 110 the upcoming brake event may comprise looking ahead a predetermined time period. The predetermined time period may correspond to a time required to actively cool 140 the resistor 40 to a nominal temperature. The step of detecting 110 the upcoming brake event may comprise detecting 110 the upcoming brake by the vehicle 10 within the time period. The time period may correspond to a distance window. The step of detecting 110 an upcoming brake event of the vehicle 10, by the control unit 50, may comprise detecting 110 the upcoming event based on received inputs, by various sensors to, such as a road altitude, global positioning system, GPS, route, and current temperature of the resistor 40. In a case that no upcoming brake event is detected, the method may start over from the step of detecting 110.

**FIG.** 4 shows that the method 100 comprises the step of predicting 120 a temperature of the resistor 40 at an onset of the upcoming brake event, by the control unit 50. In a case that a predicted temperature of the resistor 40 at the onset of the upcoming brake event satisfies a temperature acceptance criterion, the method 100 may start over from the step of detecting 110. The method 100 may further comprising the step of controlling 130 a status of a power of a cooling system 70, prior to actively cooling the resistor 40. The method 100 may further comprise the step of controlling 130 a status of a power of the fuel cell system 30, prior to actively cooling 140 the resistor 40.

**FIG.** 4 shows that the method 100 comprises the step of actively cooling 130 the resistor 40, in preparation for the upcoming brake event, if the predicted temperature of the resistor 40 at the onset of the upcoming brake event fails to satisfy a temperature acceptance criterion. The step of actively cooling 140 the resistor 40 may comprise actively cooling 140 the resistor 40, in preparation for the upcoming brake event, by a compressor 60. The step of actively cooling 140 the resistor 40 may comprise actively cooling 140 the resistor 40, in preparation for the upcoming brake event, by a cooling system 70. The method 100 may be performed in the same order as shown in **FIG. 4****.** The method 100 may be performed using the system and the vehicle respectively shown in **FIG. 2** and **FIG. 1****.** The method 100 may be a computer-implemented method 100. The computer-implemented method 100 for actively cooling 140 an energy dissipating resistor 40 in a vehicle fuel cell system 20 may comprise the steps of the method 100, as shown in **FIG. 4** and defined above. The computer-implemented method 100 may be configured to be performed by a processing circuitry of a control unit 50 of the vehicle fuel cell system 20. The method 100 may be executed by the processing circuitry of a computer program product. The computer program product may comprise program code for performing, when executed by the processing circuitry, the steps of the method 100, as shown in **FIG. 4** and defined above. The method 100 may be executed by the processing circuitry of a non-transitory computer-readable storage medium.
The non-transitory computer-readable storage medium may comprise instructions, which when executed by the processing circuitry, cause the processing circuitry to perform the steps of the method 100, as shown in **FIG. 4** and defined above.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle fuel cell system (20) comprising an energy dissipating resistor (40) arranged in connection with a control unit (50), wherein the control unit (50) is configured to detect (110) an upcoming brake event by the vehicle (10) within a time period, wherein the control unit (50) is configured to predict (120) a temperature of the resistor (40) at an onset of the upcoming brake event, and wherein the control unit (50) is configured to actively cool (140) the resistor (40), in preparation for the upcoming brake event, if the predicted temperature of the resistor (40) at the onset of the upcoming brake event fails to satisfy a temperature acceptance criterion.

2. The vehicle fuel cell system (20) according to claim 1, wherein control unit (50) is configured to detect (110) the upcoming brake by the vehicle (10) by looking ahead a predetermined time period, wherein the predetermined time period corresponds to a time required to actively cool (140) the resistor (40) to a nominal temperature.

3. The vehicle fuel cell system (20) according to claim 1, wherein the control unit (50) is configured to detect (110) the upcoming brake by the vehicle (10) within the time period, the time period corresponding to a distance window.

4. The vehicle fuel cell system (20) according to any of the preceding claims, wherein the system (20) further comprises a fuel cell system (30), wherein the temperature acceptance criterion corresponds to a ramp down time of the fuel cell system (30).

5. The vehicle fuel cell system (20) according to any of the preceding claims, wherein the system (20) further comprises a compressor (60) arranged in connection with the fuel cell system (30) and configured to provide air to the fuel cell system (30), wherein the control unit (50) is configured to actively cool (140) the resistor (40), in preparation for the upcoming brake event, by the compressor (60).

6. The vehicle fuel cell system (20) according to any of the claims 1-4, wherein the system (20) further comprises a cooling system (70) arranged in connection with a fuel cell system (30) and configured to cool down the fuel cell system (30), wherein the control unit (50) is configured to actively cool the resistor (40), in preparation for the upcoming brake event, by the cooling system (70).

7. The vehicle fuel cell system (20) according to claim 6, wherein the control unit (50) is configured to control (130) a status of a power of the cooling system (70), prior to actively cooling the resistor (40).

8. The vehicle fuel cell system (20) according to claim 6, wherein the control unit (50) is configured to control (130) a status of a power of the fuel cell system (30), prior to actively cooling (140) the resistor (40).

9. The vehicle fuel cell system (20) according to any of the preceding claims, wherein the control unit (50) is configured to detect (110) the upcoming brake event by the vehicle (10) within a time period based on any of or any combination of received inputs, the inputs being related to a vehicle weight, vehicle speed, road altitude, a road inclination, global positioning system, route, and current temperature of the resistor (40).

10. A heavy-duty fuel cell electric vehicle (10) comprising a vehicle fuel cell system (20), the vehicle fuel cell system (20) comprising an energy dissipating resistor (40) arranged in connection with a control unit (50), wherein the control unit (50) is configured to detect (110) an upcoming brake event by the vehicle (10) within a time period, wherein the control unit (50) is configured to predict (120) a temperature of the resistor (40) at an onset of the upcoming brake event, and wherein the control unit (50) is configured to actively cool (140) the resistor (40), in preparation for the upcoming brake event, if the predicted temperature of the resistor (40) at the onset of the upcoming brake event fails to satisfy a temperature acceptance criterion.

11. A method (100) for actively cooling (140) an energy dissipating resistor (40) in a vehicle fuel cell system (20) comprising a control unit (50), the method (100) comprising the steps of:
- detecting (110) an upcoming brake event of the vehicle (10), by the control unit (50), within a time period,
- predicting (120) a temperature of the resistor (40) at an onset of the upcoming brake event, by the control unit (50), and
- actively cooling (130) the resistor (40), in preparation for the upcoming brake event, if the predicted temperature of the resistor (40) at the onset of the upcoming brake event fails to satisfy a temperature acceptance criterion.

12. The method (100) according to claim 11, wherein the step of detecting (110) the upcoming brake event comprises looking ahead a predetermined time period, wherein the predetermined time period corresponds to a time required to actively cool (140) the resistor (40) to a nominal temperature.

13. The method (100) according to claim 11, wherein the step of detecting (110) the upcoming brake event comprises detecting (110) the upcoming brake by the vehicle (10) within the time period, the time period corresponding to a distance window.

14. The method (100) according to any of the claims 11-13, wherein the step of actively cooling (140) the resistor (40) comprises actively cooling (140) the resistor (40), in preparation for the upcoming brake event, by a compressor (60).

15. The method (100) according to any of the claims 11-13, wherein the step of actively cooling (140) the resistor (40) comprises actively cooling (140) the resistor (40), in preparation for the upcoming brake event, by a cooling system (70).

16. The method (100) according to claim 15, the method (100) further comprising:
controlling (130) a status of a power of a cooling system (70), prior to actively cooling the resistor (40).

17. The method (100) according to claim 15, the method (100) further comprising:
controlling (130) a status of a power of the fuel cell system (30), prior to actively cooling (140) the resistor (40).

18. The method (100) according to any of the claims 10-17, wherein the step of detecting (110) an upcoming brake event of the vehicle (10), by the control unit (50), comprises detecting (110) the upcoming event based on received inputs, by various sensors to, such as a road altitude, global positioning system, GPS, route, and current temperature of the resistor (40).

19. A computer-implemented method (100) for actively cooling (140) an energy dissipating resistor (40) in a vehicle fuel cell system (20), comprising the steps of a method (100) according to any of the claims 11-18, the method (100) configured to be performed by a processing circuitry of a control unit (50) of the vehicle fuel cell system (20).

20. A computer program product comprising program code for performing, when executed by the processing circuitry, the method of any of claims 11-18.

21. A non-transitory computer-readable storage medium comprising instructions, which when executed by the processing circuitry, cause the processing circuitry to perform the method of any of claims 11-18.
